(19) Europäisches Patentamt
European Patent Office
Office européen des brevets

(11) EP 0 978 535 A2

(12) EUROPEAN PATENT APPLICATION

(43) Date of publication:
**09.02.2000 Bulletin 2000/06**

(51) Int. Cl.⁷: **C08L 21/00**
// (C08L21/00, 83:04)

(21) Application number: **99122036.9**

(22) Date of filing: **02.10.1997**

(84) Designated Contracting States:
**DE FR GB IT**

(30) Priority: **04.10.1996 JP 26438896**
**04.10.1996 JP 26447896**
**22.11.1996 JP 31214496**

(62) Document number(s) of the earlier application(s) in accordance with Art. 76 EPC:
**97943137.6 / 0 872 515**

(71) Applicant:
**THE YOKOHAMA RUBBER CO., LTD.**
**Tokyo, 105 (JP)**

(72) Inventors:
- **Midorikawa, Shingo,**
  **The Yokohama Rubber Co., Ltd.**
  **Hiratsuka-shi, Kanagawa 254 (JP)**
- **Yatsuyanagi, Fumito,**
  **The Yokohama Rubber Co., Ltd.**
  **Hiratsuka-shi, Kanagawa 254 (JP)**
- **Ishikawa, Kazunori,**
  **The Yokohama Rubber Co., Ltd.**
  **Hiratsuka-shi, Kanagawa 254 (JP)**

(74) Representative: **HOFFMANN - EITLE**
**Patent- und Rechtsanwälte**
**Arabellastrasse 4**
**81925 München (DE)**

Remarks:
This application was filed on 15 - 11 - 1999 as a divisional application to the application mentioned under INID code 62.

# (54) Silica-compounded diene rubber composition

(57) A rubber composition containing 100 parts by weight of a diene rubber, 5 to 100 parts by weight of silica, 10 to 150 parts by weight of carbon black, and 1 to 40% by weight, based upon the weight of the silica, of a polysiloxane having an average degree of polymerization of 3 to 10,000 containing the following alkoxysilyl group (I) or acyloxysilyl group (II):

$$\equiv Si\text{-}OR^1 \quad (I)$$

$$\equiv Si\text{-}OCOR^2 \quad (II)$$

wherein, $R^1$ is a substituted or unsubstituted monovalent hydrocarbon group having 1 to 18 carbon atoms or an ether bond-containing organic group having 1 to 18 carbon atoms and $R^2$ is hydrogen or a hydrocarbon group having 1 to 21 carbon atoms, provided that at least six alkoxy groups or at least two acyloxy groups directly bonded to the Si atoms are present in each molecule.

EP 0 978 535 A2

## Description

TECHNICAL FIELD

The present invention relates to a rubber composition. More specifically, it relates to a vulcanizable silica-compounded diene rubber composition having a improved processability when unvulcanized. The rubber composition according to the present invention is useful as a rubber composition for treads of passenger cars, trucks, and buses, in particular as tread rubber for which characteristics such as wet skid resistance, abrasion resistance, low rolling resistance, ice and snow performance, are required. It should be noted that the term, "silica" used herein means silicic acid hydride and the term "vulcanization" includes cross-linking with a peroxide etc., in addition to normal vulcanization with sulfur.

BACKGROUND ART

Rubber compositions comprising various types of rubber in which silica is compounded are known and, for example, are used as rubber compositions for tire treads having low heat buildup and superior abrasion resistance. Tire treads containing silica, however, are low in rolling resistance and good in wet skid resistance, but suffer from the problems of a higher viscosity, slower vulcanization, lower mixing performance, etc. of the unvulcanized compound and therefore poorer productivity. In particular, when simply simultaneously mixing silica and carbon black, the carbon black and rubber undergo sufficient contact and reaction which promote sufficient mixing, but the silica is insufficiently mixed and poor dispersion of the silica is caused, and therefore, the sufficient properties of the silica have not been utilized. To solve this problem, various proposals have been made in the past, but at the present time none of them can be said to be satisfactory in practice.

For example, it has been proposed to add diethylene glycol or a fatty acid (for example, see Gomu Kogyo Binran in Japanese (4th Edition), pp. 517 to 518, 1994), to add a carboxylic acid metal salt (for example, see Tire Technology International 1995, pp. 107 to 108), to previously treat the silica with silicone oil (for example, see Japanese Unexamined Patent Publication (Kokai) No. 6-248116), etc., but none of these can be said to be a sufficient method in practice. Further, there is no way to deal with the occurrence of burning and the reduction in the kneading performance at the time of mixing, and therefore, there are no way other than those of increasing the times of mixing etc. Furthermore, when mixing carbon black and silica, it is practice the present that they are separately mixed or the mixing time and the times of mixing are increased.

DISCLOSURE OF INVENTION

Accordingly, objects of the present invention are to eliminate the above-mentioned problems in the prior art and provide a vulcanizable diene rubber composition containing silica which improves the processability of the unvulcanized diene rubber composition substantially without impairing the characteristics of the vulcanizable diene rubber composition containing silica, for example, the low heat buildup and the abrasion resistance.

Another object of the present invention is to provide a rubber composition comprising a specific polymer and carbon black/silica system in which a specific polysiloxane is mixed so as to improve the processability - a defect of systems containing silica as explained above - which is useful as a rubber composition for tire treads for passenger cars, trucks, and buses and which has a large $\tan\delta$ temperature dependency and is excellent in wet skid resistance, rolling resistance, and abrasion resistance, particularly, tread rubber where wet skid resistance and abrasion resistance are required (for example, tread rubber for high performance tires).

Still another object of the present invention is to provide a rubber composition comprising a specific polymer and carbon black/silica system in which a specific polysiloxane is mixed so as to improve the processability - a defect of systems containing silica as explained above - which is useful as a rubber composition for tire treads for passenger cars, trucks, and buses and which has a large $\tan\delta$ temperature dependency and is excellent in rolling resistance and wet skid resistance, particularly, tread rubber where a low rolling resistance and wet skid resistance are required (for example, tread rubber for low fuel consumption tires).

Still another object of the present invention is to provide a rubber composition comprising a specific polymer and carbon black/silica system in which a specific polysiloxane is mixed so as to improve the processability - a defect of systems containing silica as explained above - which is useful as a rubber composition for tire treads for passenger cars, trucks, and buses, and which has a reduced low temperature hardness and is excellent in ice and snow performance and abrasion resistance, particularly, tread rubber where ice and snow performance and abrasion resistance are sought (for example, tread rubber for studless tires).

In accordance with the present invention, there is provided a rubber composition comprising 100 parts by weight of a diene rubber, 5 to 100 parts by weight of silica, 10 to 150 parts by weight of carbon black, and 1 to 40% by

weight, based upon the weight of the silica, of a polysiloxane having an average degree of polymerization of 3 to 10,000 containing the following alkoxysilyl group (I) or acyloxysilyl group (II):

$$\equiv Si\text{-}OR^1 \qquad (I)$$

$$\equiv Si\text{-}OCOR^2 \qquad (II)$$

wherein, $R^1$ is a substituted or unsubstituted monovalent hydrocarbon group having 1 to 18 carbon atoms or an ether bond-containing organic group having 1 to 18 carbon atoms and $R^2$ is hydrogen or a $C_1$ to $C_{21}$ hydrocarbon group, provided that at least six alkoxy groups or at least two acyloxy groups, directly bonded to the Si atoms are present in each molecule.

In accordance with the preferable embodiment of the present invention, there is provided a rubber composition further comprising 1 to 40% by weight, based upon the weight of the silica content, of a silane coupling agent in the rubber composition.

BEST MODE FOR CARRYING OUT THE INVENTION

The constitution, operation, and effects of the present invention will be explained in detail below.

As explained above, the vulcanized physical properties of a tire tread containing silica are excellent, but there is the defect of a poor processability when unvulcanized. According to the finding of the present inventors, this is due to the presence of the silanol groups (≡Si-OH) on the surface of the silica. The processability of the unvulcanized composition is decreased due to the phenomena that structures are formed in the rubber composition and the viscosity is increased due to the cohesive force of the silanol groups, the vulcanization accelerator and the like are adsorbed and vulcanization is delayed due to the polarity of the silanol groups, and the kneading performance of the mixing is decreased due to the insufficient compatibility with nonpolar rubber. Further, rubber compositions containing silica often use silane coupling agents for reinforcing the rubber. Silanol groups are also present at the inside cavities of the silica particles. Therefore the problem occurs in that these silanol groups are reacted with the silane coupling agents, whereby the silane coupling agents are wastefully consumed and the reinforcing effect is decreased, so that a large amount of silane coupling agents should be used. If diethylene glycol or another polar substance is added as in the prior art, the phenomenon of the adsorption of the polar compounding agents such as vulcanization accelerator can be prevented to a certain extent, but it cannot be completely prevented and it was not possible to prevent the substances such as silane coupling agents which are capable of chemically bonding with silica particles from bonding in the internal cavities.

Therefore, according to the present invention, a polysiloxane containing the alkoxysilyl group (I) or the acyloxysilyl group (II) is compounded into the rubber composition, These groups react with the silanol groups of the silica, whereby the polysiloxane covers the surface of the silica. As a result, the problems of the prior art can be solved and it is possible to effectively suppress the increase in viscosity caused by the cohesive force and polarity of the silanol groups of silica and the wasteful consumption of the polar additives such as vulcanization accelerator and the silane coupling agents, etc.

According to the present invention, the polysiloxane, compounded into the rubber composition, containing the alkoxysilyl group (I) or acyloxysilyl group (II) so that there are at least six alkoxy groups directly bonded to the Si atoms in each molecule or there are at least two acyloxy groups in each molecule, as mentioned above, must be a polymer (or oligomer) having the alkoxysilyl group (I) or acyloxysilyl group (II) which react with a silanol group or a polar group, covering the surface of the filler particles, and having a size providing the lubricating effect, that is, the average degree of polymerization of 3 to 10,000, preferably 10 to 1,000. Therefore, in the polysiloxane of the present invention, the presence of a specific amount of $\equiv Si\text{-}O\text{-}R^1$ group or $\equiv Si\text{-}OCOR^2$ group is required. These groups may be at either the main chain, side chains, or terminals of the polysiloxane, but they are preferably at the main chains. By including at least six $OR^1$ groups contained in these groups in each molecule or at least two $OCOR^2$ groups in each molecule, it is possible to achieve a strong bond with the filler. Further, the groups may be hydrogen group or other organic groups. Note that the above polysiloxane used in the present invention preferably has at least one hydrocarbon group, preferably an alkyl group, directly bonded to the Si atoms in the molecule from the viewpoint of the affinity with the rubber component. The polysiloxane is a known substance and may generally be, for example, produced as follows:

A polysiloxane containing the alkoxysilyl group or acyloxysilyl group is synthesized by reacting a polysiloxane containing a Si-H group with an alcohol or carboxylic acid in the presence of a catalyst.

As the polysiloxane containing ≡Si-H groups, the following may be mentioned:

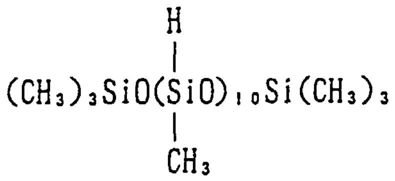

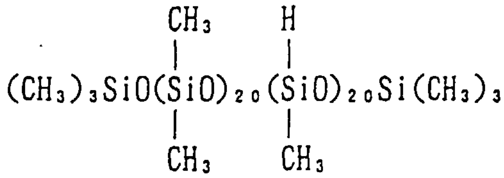

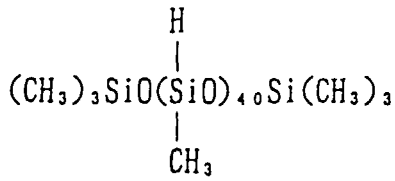

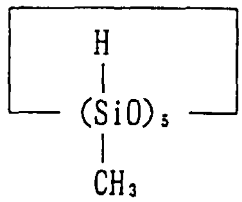

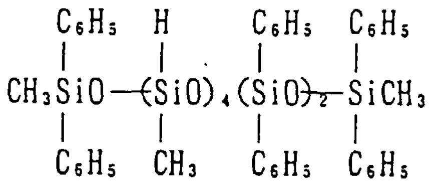

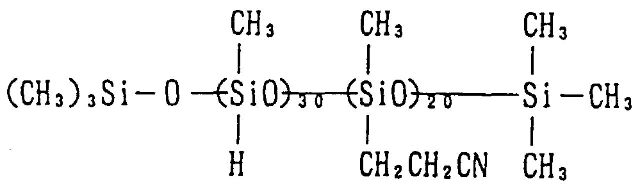

As the alcohol, methanol, ethanol, propanol, butanol, pentanol, heptanol, octanol, octadecanol, phenol, benzyl alcohol, and also alcohols having oxygen atoms such as ethylene glycol monomethyl ethers, diethylene glycol monomethyl ethers, may be exemplified. Further, as the carboxylic acid, acetic acid, propionic acid, palmitic acid, stearic acid, myristic acid, etc. may be exemplified. Further, as the catalyst, chloroplatinic acid, a platinum-ether complex, a platinum-olefin complex, $PdCl_2(PPh_3)_2$, and $RhCl_2(PPh_3)_2$ may be used.

The organic groups may be easily introduced by reacting ≡Si-H and an organic compound having double bonds using the above catalysts. As compounds having double bonds, styrene, α-methylstyrene, α-methylstyrene dimer, limonene, vinyl cyclohexene, etc. may be exemplified.

As another method, it is possible to synthesize by reacting a polysiloxane containing the corresponding ≡Si-H group with an alkoxysilane containing a double bond shown below in the presence of the above catalysts.

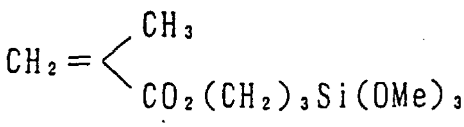

$$CH_2 = CH\text{-}Si(OMe)_3$$

$$CH_2 = CH\text{-}Si(OC_2H_4OCH_3)_3$$

As still another method, the polysiloxane used in the present invention may be synthesized by reacting a silanol-terminated polysiloxane and alkoxysilane in the presence of a catalyst such as a bivalent tin compound. As such a silanol-terminated polysiloxane, the following may be exemplified.

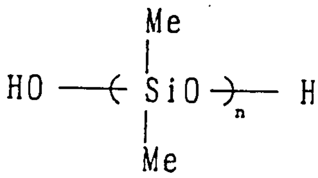

wherein n is 1 to 2000

As the alkoxysilane, the following alkoxysilanes may be exemplified. Further, the silane coupling agents shown in Table I may be exemplified.

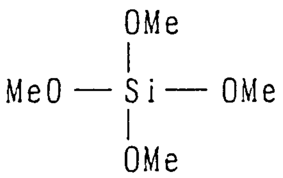
,
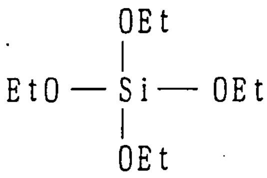
,
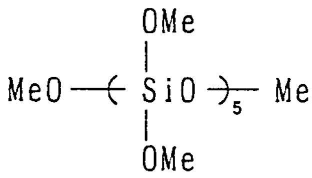

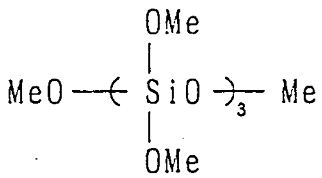

Table I

| Compound name | Structure |
|---|---|
| Vinyltrimethoxysilane | $CH_2=CHSi(OCH_3)_3$ |
| Vinyltriethoxysilane | $CH_2=CHSi(OCH_2CH_3)_3$ |
| Vinyltris(2-methoxyethoxy) silane | $CH_2=CHSi(OCH_2CH_2OCH_3)_3$ |
| N-(2-aminoethyl)3-amino-propylmethyldimethoxy-silane | 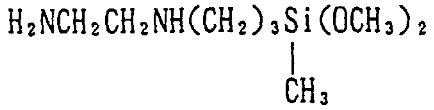 |
| N-(2-aminoethyl)3-amino-propyltrimethoxysilane | $H_2NCH_2CH_2NH(CH_2)_3Si(OCH_3)_3$ |
| 3-aminopropyltriethoxy-silane | $H_2N(CH_2)_3Si(OCH_3)_3$ |
| 3-glycidoxypropyl-trimethoxysilane | 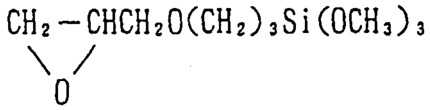 |
| 3-glycidoxypropylmethyl-dimethoxysilane | 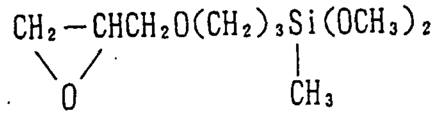 |
| 2-(3,4-epoxycyclohexyl) ethyltrimethoxysilane | 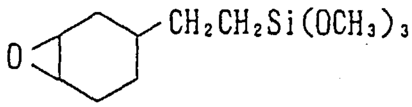 |
| 3-metacryloxypropyl-trimethoxysilane | 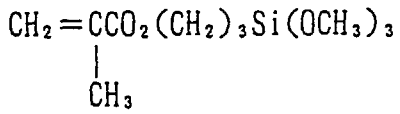 |
| 3-mercaptopropyl-trimethoxysilane | $HS(CH_2)_3Si(OCH_3)_3$ |
| 3-aminopropyltrimethoxy-silane | $H_2N(CH_2)_3Si(OCH_2CH_3)_3$ |
| bis-[3-(triethoxysilyl)-propyl]tetrasulfide | $\{(CH_3CH_2O)_2Si(CH_2)_3\}_2S_4$ |

The polysiloxane used in the present invention may further be synthesized by a reaction between a polysiloxane having a reactive functional group at its side chain or terminal and a silane coupling agent shown in Table I. As polysiloxanes having reactive functional groups, those having an epoxy group, amino group, mercapto group, carboxyl group, etc. may be exemplified.

Note that the polysiloxane used in the present invention, as explained above, is not particularly limited in the terminal groups and side chains. These are determined by the type of the starting material used at the time of production. For example, these may be trimethylsilyl group, methyldiphenylsilyl group, triphenylsilyl group, and also organic groups.

The amount of the polysiloxane used in the present invention is 1 to 40% by weight, preferably 2 to 20% by weight, most preferably 5 to 10% by weight, based upon the weight of the silica in the rubber composition. If the amount of the polysiloxane compounded is too small, unpreferably, the desired effect cannot be obtained, while conversely if too large, unpreferably there are cases where some of this substance not bonded with silica will leak out of the vulcanizate.

The vulcanizable diene rubber composition according to the preferred embodiment of the present invention further contains a silane coupling agent. The silane coupling agent used in the present invention may be any silane coupling agent conventionally used together with a silica filler and typically may be one shown in Table I. Among these, bis-[3-(triethoxysilyl)-propyl]tetrasulfide is most preferred from the viewpoint of processability. Further, it is possible to suitably use special silane coupling agents which react with the rubber at the time of vulcanization shown in Table II below.

Table II

| Compound name | Structure |
|---|---|
| 3-trimethoxysilylpropyl-N,N-dimethylthiocarbamoyl-tetrasulfide | 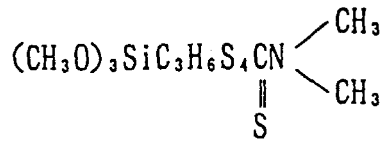 |
| Trimethoxysilylpropyl-mercaptobenzothiazole-tetrasulfide | 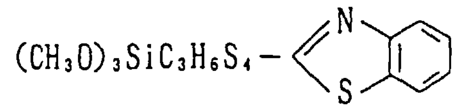 |
| Triethoxysilylpropyl-methacrylate-monosulfide | 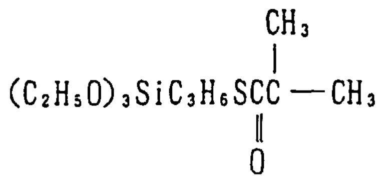 |
| Dimethoxymethylsilylpropyl-N,N-dimethylthio-carbamoyl-tetrasulfide | 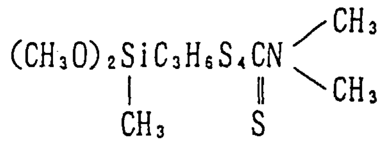 |

If a silane coupling agent is compounded into the vulcanizable diene rubber composition according to the present invention, it is possible to further improve the abrasion resistance and the dry performance. The preferable amount of the silane coupling agent used in the present invention is 1 to 40% by weight, more preferably 2 to 10% by weight, based upon the amount of the silica compounded in the composition. If the amount of the silane coupling agent compounded is too small, the desired effect cannot be obtained, while conversely if too great, burning (scorching) tends to unpreferably occur in the mixing and extrusion steps.

According to the first aspect of the present invention, there is provided a rubber composition comprising 100 parts by weight of a diene rubber containing at least 30 parts by weight of SBR having a 20 to 60% styrene content, in which 5 to 70 parts by weight of silica and 10 to 100 parts by weight of carbon black having a nitrogen specific surface area ($N_2SA$) of at least 70 $m^2/g$ and a 24M4DBP oil absorption of at least 70 ml/100 g are compounded and further a total weight of the silica and the carbon black is at least 50 parts by weight, and 1 to 40% by weight, based upon the weight of the silica content, of a polysiloxane having an average degree of polymerization of 3 to 10,000 containing the alkoxysilyl group (I) or acyloxysilyl group (II) so that there are at least six alkoxy groups directly bonded to the Si atom in each molecule or there are at least two acyloxy groups directly bonded to the Si atom in each molecule is contained.

The vulcanizable diene rubber composition according to the first aspect of the present invention must contain at least 30 parts by weight of SBR having a styrene content of 20 to 60%. By including the rubber component in such a ratio, the gripping power of the diene rubber composition of the present invention can be improved when used as tread rubber. As the other diene rubbers compounded in the vulcanizable diene rubber composition of the present invention, any diene rubber conventionally compounded into various rubber compositions, for example, natural rubber (NR), polyisoprene rubber (IR), various type butadiene rubbers (BR), acrylonitrile-butadiene copolymer rubber (NBR), butyl

rubber (IIR), and the like may be used. Further, these diene rubbers may also be used as the blend with ethylene-propylene copolymer rubbers (EPR, EPDM) etc.

Regarding the silica and the carbon black used as a filler for corresponding with the diene rubber composition according to the first aspect of the present invention, 10 to 100 parts by weight of carbon black having a nitrogen specific surface area ($N_2SA$) of at least 70 $m^2/g$ and a 24M4DBP oil absorption of at least 70 ml/100 g is compounded with 5 to 70 parts by weight of silica. These ratios are necessary for achieving the purpose of the present rubber composition, namely a balance of both the improvement in the wet skid resistance and rolling resistance by the silica and the improvement in the abrasion resistance and dry road performance by the carbon black. Further, regarding the carbon black used, those having a nitrogen specific surface area ($N_2SA$) of 70 $m^2/g$ to 200 $m^2/g$ and a 24M4DBP oil absorption of 70 ml/100 g to 200 ml/100 g is preferably used in the present invention.

According to the second aspect of the present invention, there is provided a rubber composition comprising 100 parts by weight of a diene rubber, containing at least 20 parts by weight of SBR having a Tg of -25°C or less and at least 10 parts by weight of at least one rubber selected from NR, IR and BR, in which 5 to 50 parts by weight of silica and 10 to 55 parts by weight of carbon black having a nitrogen specific surface area ($N_2SA$) of at least 60 $m^2/g$ and a 24M4DBP oil absorption of at least 70 ml/100 g are compounded, wherein a total weight of silica and carbon black is 60 parts by weight or less, and 1 to 40% by weight, based upon the weight of the silica content, of a polysiloxane having an average degree of polymerization of 3 to 10,000 with the alkoxysilyl group (I) or acyloxysilyl group (II) is contained so that at least six alkoxy groups or at least two acyloxy groups, directly bonded to the Si atom in each molecule.

The rubber compounded as the main component in the vulcanizable rubber composition according to the second aspect of the present invention is a diene rubber containing at least 20 parts by weight of SBR having a Tg of -25°C or less and at least 10 parts by weight of at least one rubber selected from NR, IR and BR. By selecting this specific rubber compound, both the rolling resistance and abrasion resistance of the vulcanizable rubber composition of the present invention can be improved.

Regarding the silica and the carbon black used as a filler for compounding with the diene rubber composition according to the second aspect of the present invention, 10 to 55 parts by weight of carbon black having a nitrogen specific surface area ($N_2SA$) of at least 60 $m^2/g$ and a 24M4DBP oil absorption of at least 70 ml/100 g is compounded with 5 to 50 parts by weight of silica and the total weight of the silica and carbon black compounded should be 60 parts by weight or less, preferably 20 to 60 parts by weight. These ratios are necessary for achieving the purpose of the present rubber composition, namely, a balance of both the improvements in the wet skid resistance and the low rolling resistance by the silica and the improvement in the abrasion resistance by the carbon black. Further, regarding the carbon black, those having a nitrogen specific surface area ($N_2SA$) of 60 $m^2/g$ to 200 $m^2/g$ and a 24M4DBP oil absorption of 70 ml/100 g to 200 ml/100 g is preferably used in the present invention.

According to the third aspect of the present invention, there is provided a rubber composition comprising 100 parts by weight of a diene rubber having a Tg of -45°C or less in which 5 to 60 parts by weight of silica and 10 to 60 parts by weight of carbon black having a nitrogen specific surface area ($N_2SA$) of at least 70 $m^2/g$ and a 24M4DBP oil absorption of at least 70 ml/100 g are compounded and 1 to 40% by weight, based upon the weight of the silica content, of a polysiloxane having an average degree of polymerization of 3 to 10,000 containing the alkoxysilyl group (I) or acyloxysilyl group (II) so that at least six alkoxy groups or at least two acyloxy groups, directly bonded to the Si atoms in each molecule is contained.

The amount of the polysiloxane used in the third aspect of the present invention is 1 to 40% by weight, preferably 2 to 20% by weight, most preferably 5 to 10% by weight, based upon the weight of the silica in the rubber composition. If the amount of the polysiloxane is too small, unpreferably the desired effect cannot be obtained, while conversely when too large, the substance not bonded with silica sometimes will leak out from the vulcanizate.

The diene rubbers having a Tg of -45°C or less compounded as the main component in the vulcanizable rubber composition according to the third aspect of the present invention include those conventionally compounded into various rubber compositions, for example, may be selected from natural rubber (NR), polyisoprene rubber (IR), various styrene-butadiene copolymer rubbers (SBR), various polybutadiene rubbers (BR), acrylonitrile-butadiene copolymer rubber (NBR), butyl rubber (IIR), and the like. These diene rubbers may be used alone or in any blend thereof. Note that these diene rubbers may also be used as blends with ethylene-propylene copolymer rubbers (EPR, EPDM) etc.

As the diene rubber used in the third aspect of the present invention, those having a Tg of -45°C or less is selected since the rubber composition of the present invention is intended in particular for use as tread rubber where ice and snow performance and abrasion resistance are sought (for example, tread rubber for studless tires). By selecting the rubber of the rubber component of the rubber composition containing silica, it is possible to further improve the ice and snow performance and abrasion resistance originally possessed by a rubber composition containing silica together with the effect of improvement of the processability of the polysiloxane.

Regarding the silica and the carbon black, used as a filler for corresponding with the diene rubber composition according to the third aspect of the present invention, 10 to 60 parts by weight of carbon black having a nitrogen specific surface area ($N_2SA$) of at least 70 $m^2/g$ and a 24M4DBP oil absorption of at least 70 ml/100 g is compounded with 5 to

60 parts by weight of silica in the present invention. These compounding ratios are necessary for achieving the purpose of the third aspect of the present invention, namely a balance of both the improvement in the ice and snow performance and the wet skid resistance by the silica and the improvement in the abrasion resistance by the carbon black. Further, regarding the carbon black, those having a nitrogen specific surface area ($N_2SA$) of 70 $m^2/g$ to 200 $m^2/g$ and a 24M4DBP oil absorption of 70 ml/100 g to 200 ml/100 g are preferably used in the present invention.

The dynamic elasticity E' (0°C) of the rubber composition according to the third aspect of the present invention is preferably 2 to 20 MPa. Further, the groove area ratio of the tread is preferably 10 to 50%, further 20 to 40%. Also, the STI (i.e., snow traction index) is preferably 100 to 250.

If the above STI is too large, unpreferably the rigidity is decreased and the driving stability becomes poor, while if it is too small, the snow performance is unpreferably decreased. Further, if the E' is too large, the ice performance is unpreferably decreased, while if it is too small, the driving stability is unpreferably decreased. Further, if the groove area ratio is too large, the abrasion resistance is unpreferably decreased, while if it is too small, the ice and snow performance is unpreferably decreased.

The rubber composition according to the present invention may further contain, in addition to the above-mentioned essential ingredients of the different aspects, various additives generally compounded for tire use and other general rubber use, for example, a vulcanization or cross-linking agent, a vulcanization or cross-linking accelerator, various types of oils, an antioxidant, reinforcing agent, filler, plasticizer, softening agent, etc. These additives may be mixed and vulcanized by general methods to form a composition and used for vulcanization or cross-linking. The amounts of these additives compounded may be those conventionally used in the past so long as they do not adversely affect to the objects of the present invention.

EXAMPLES

The present invention will now be explained by, but by no means limited to, the following Examples and Comparative Examples.

Example I-1 to I-14 and Comparative Examples I-1 to I-9

The polysiloxane 1, polysiloxane 2, and polysiloxane 3 used for the formulation of the following Examples and Comparative Examples were synthesized by the following general methods:

Polysiloxane 1

100 g of polymethylhydrogen siloxane (KF99, made by Shin-Etsu Chemical Co.) and 60 g of methanol were mixed, 40 µl of a 1% isopropyl alcohol solution of chloroplatinic acid was added, and the mixture was allowed to react at 80°C for 10 hours. The estimated structure of this compound is as follows:

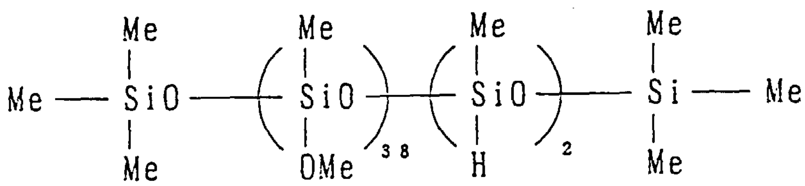

Polysiloxane 2

100 g of polymethylhydrogen siloxane (KF99, made by Shin-Etsu Chemical Co.) and 72 g of ethanol were mixed, 40 µl of a 1% isopropyl alcohol solution of chloroplatinic acid was added, and the mixture was allowed to react at 80°C for 10 hours. The estimated structure of this compound is as follows:

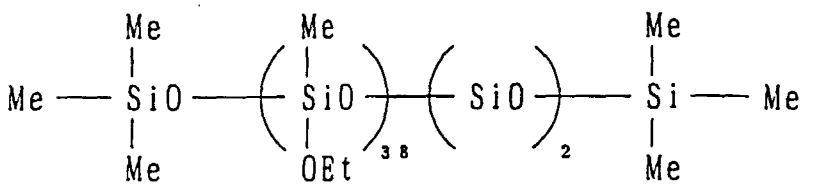

Polysiloxane 3

220 g of stearic acid (made by Shinnippon Rika, Yukijirushi 5000) was dried at 90°C under vacuum for 1 hour, 100 µl of 2.5% chloroplatinic acid was added, 50 g of polymethylhydrogen siloxane was dropwise added at 90°C, and the mixture was allowed to react at the same temperature for 2 hours and at 100°C for 2 hours. The estimated structure is as follows:

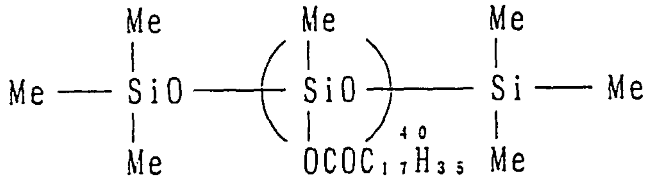

For the other ingredients used for the formulations (parts by weight) of the Examples and Comparative Examples shown in Table III, the following commercially available products were used.

SBR-1: "Nipol 1712" made by Nippon Zeon (37.5 phr, oil extended) (styrene content: 24%, vinyl content: 15%)
SBR-2: "Nipol 9520" made by Nippon Zeon (37.5 phr, oil extended) (styrene content: 38%, vinyl content: 14%)
SBR-3: Emulsion polymerized SBR (37.5 phr, oil extended, Tg = -20°C) (styrene content: 47%, vinyl content: 13%)
SBR-4: "NS116" made by Nippon Zeon (non-oil extended) (styrene content: 21%, vinyl content: 67%)
SBR-5: "NS112" made by Nippon Zeon (non-oil extended) (styrene content: 16%, vinyl content: 34%)
BR: "Nipol 1220" made by Nippon Zeon
NR: SIR-20
Carbon black 1: "DIA BLACK A" made by Mitsubishi Kasei ($N_2SA$ = 142 $m^2/g$, 24M4DBP = 98 ml/100 mg)
Carbon black 2: "SEAST KH" made by Tokai Carbon ($N_2SA$ = 93 $m^2/g$, 24M4DBP = 101 ml/100 mg)
Carbon black 3: "DIA BLACK E" made by Mitsubishi Kasei ($N_2SA$ = 41 $m^2/g$, 24M4DBP = 78 ml/100 mg)
(Note) The $N_2SA$ and 24M4DBP oil absorptions of the above carbon blacks were measured by ASTM-D3037-93 and ASTM-D-3493, respectively.
Silica: "Nipsil AQ" made by Nippon Silica Kogyo
Silane coupling agent: "Si69" made by Degussa
Silicone oil: "KF99" made by Shin-Etsu Chemical
Active agent: Diethylene glycol
Liquid polymer: Liquid BR, molecular weight 15000, 1,4 cis 80%
Aromatic oil: "Process Oil X-140" made by Kyodo Sekiyu
Zinc White: "Zinc White No. 3" made by Seido Kagaku
Stearic acid: "Lunac YA" made by Kao Soap Co.
Antioxidant: N-phenyl-N'-(1,3-dimethyl)-p-phenylene diamine ("Antigene 6C" made by Sumitomo Chemical)
Wax: "Sunnoc" made by Ouchi Shinko Chemical Industrial
Sulfur: Oil treated sulfur
Vulcanization accelerator: N-t-butyl-2-benzothiazolyl sulfenamide ("Nocceler NS-F" made by Ouchi Shinko Chemical Industrial)

Preparation of Samples

The ingredients except for the vulcanization accelerator and sulfur of the formulation (parts by weight) shown in Table III were mixed in a 1.8 liter closed type mixer for 3 to 5 minutes. The mixture was discharged when reaching 165±5°C. The vulcanization accelerator and the sulfur were mixed with this master batch by an 8-inch open roll to obtain the rubber composition. The "mixability" in the unvulcanized physical properties of the rubber composition thus obtained was evaluated.

Next, the composition was pressed and vulcanized in a 15 x 15 x 0.2 cm mold at 160°C for 20 minutes to prepare the desired test piece (rubber sheet). This was measured and evaluated for the "tanδ (-10°C, 60°C)", "wet skid resistance", "Lambourn wear", and "impact resilience" of the vulcanized physical properties.

The test methods for the unvulcanized physical properties and the vulcanized physical properties of the compositions obtained in the Examples were as follows:

Vulcanized Physical Properties

1) tanδ (-10°C, 60°C)

A viscoelasticity spectrometer (made by Toyo Seiki) was used to measure the value under conditions of temperatures of -10°C and 60°C, an initial strain of 10%, a dynamic stress of ±2%, and a frequency of 20 Hz.

2) Wet Skid Resistance

A British Portable Skid Tester was used to measure the value under conditions of a wet road (temperature 20°C). The values were indexed to Comparative Example I-1 as 100. The larger the value, the better the skid resistance shown.

3) Lambourn Abrasion

A Lambourn abrasion tester (made by Iwamoto Seisakusho) was used to measure the abrasion loss under conditions of a temperature of 20°C and a slip rate of 50%. The values were indexed to Comparative Example I-1 as 100. The larger the value, the better the abrasion resistance shown.

4) Impact Resilience

The impact resilience at a temperature of 60°C was measured according to JIS K 6301.

Unvulcanized Physical Properties

1) Mixability

The knitting performance of the mixed rubber, the sheeting, the state of dispersion of the carbon black and silica, etc. were evaluated by a 5 point system.

These Examples show the results of evaluation of mixing of polysiloxane, the silane coupling agent, and all ingredients in rubber compositions of mixtures of SBR and SBR, SBR and BR, and SBR, BR, and NR. These formulations and the results thereof are shown in Table III.

Table III

| | Comp. Ex. I-1 | Comp. Ex. I-2 | Ex. I-1 | Ex. I-2 | Ex. I-3 | Ex. I-4 | Ex. I-5 |
|---|---|---|---|---|---|---|---|
| Formulation | | | | | | | |
| SBR-1 | 44 | 44 | 44 | 44 | 44 | 44 | 55 |
| SBR-2 | 93.5 | 93.5 | 93.5 | 93.5 | 93.5 | 93.5 | - |
| SBR-3 | - | - | - | - | - | - | 82.5 |
| SBR-4 | - | - | - | - | - | - | - |
| SBR-5 | - | - | - | - | - | - | - |
| BR | - | - | - | - | - | - | - |
| NR | - | - | - | - | - | - | - |
| Carbon black-1 | 90 | 70 | 70 | 70 | 70 | 70 | 70 |
| Carbon black-2 | - | - | - | - | - | - | - |
| Carbon black-3 | - | - | - | - | - | - | - |
| Silica | - | 20 | 20 | 20 | 20 | 20 | 20 |
| Silane coupling agent | - | 2.0 | 1.0 | 0.5 | 1.5 | 1.0 | 1.0 |
| Polysiloxane-1 | - | - | 1.0 | 1.5 | 0.5 | 3.0 | 1.0 |
| Polysiloxane-2 | - | - | - | - | - | - | - |
| Polysiloxane-3 | - | - | - | - | - | - | - |
| Silicone oil | - | - | - | - | - | - | - |
| Active agent | - | 1.3 | 1.3 | 1.3 | 1.3 | 1.3 | 1.3 |
| Aromatic oil | 12.5 | 12.5 | 12.5 | 12.5 | 12.5 | 12.5 | 12.5 |
| Zinc white | 3.0 | 3.0 | 3.0 | 3.0 | 3.0 | 3.0 | 3.0 |
| Stearic acid | 2.0 | 2.0 | 2.0 | 2.0 | 2.0 | 2.0 | 2.0 |
| Antioxidant | 2.0 | 2.0 | 2.0 | 2.0 | 2.0 | 2.0 | 2.0 |
| Wax | 0.5 | 0.5 | 0.5 | 0.5 | 0.5 | 0.5 | 0.5 |
| Sulfur | 1.8 | 1.8 | 1.8 | 1.8 | 1.8 | 1.8 | 1.8 |
| Vulcanization accelerator | 1.5 | 1.5 | 1.5 | 1.5 | 1.5 | 1.5 | 1.5 |
| Physical properties | | | | | | | |
| tanδ (-10°C) | 0.89 | 0.91 | 0.92 | 0.92 | 0.92 | 0.92 | 0.99 |
| tanδ (60°C) | 0.43 | 0.38 | 0.37 | 0.36 | 0.37 | 0.36 | 0.40 |
| Wet skid (index) | 100 | 109 | 111 | 112 | 111 | 112 | 116 |
| Lambourn abrasion (index) | 100 | 94 | 103 | 106 | 100 | 108 | 100 |
| Impact resilience (index) | 100 | 113 | 116 | 118 | 115 | 119 | 110 |
| Mixability | 5 | 3 | 5 | 5 | 5 | 5 | 5 |

Table III (Continued)

| | Ex. I-6 | Ex. I-7 | Ex. I-8 | Ex. I-9 | Ex. I-10 | Ex. I-11 | Ex. I-12 |
|---|---|---|---|---|---|---|---|
| Formulation | | | | | | | |
| SBR-1 | 44 | - | - | 44 | 44 | 44 | 44 |
| SBR-2 | - | 68.75 | - | 93.5 | 93.5 | 93.5 | 93.5 |
| SBR-3 | - | - | 93.5 | - | - | - | - |
| SBR-4 | 68 | - | - | - | - | - | - |
| SBR-5 | - | 50 | - | - | - | - | - |
| BR | - | - | 32 | - | - | - | - |
| NR | - | - | - | - | - | - | - |
| Carbon black-1 | 70 | 70 | 70 | 55 | - | 20 | 70 |
| Carbon black-2 | - | - | - | - | 70 | - | - |
| Carbon black-3 | - | - | - | - | - | - | - |
| Silica | 20 | 20 | 20 | 20 | 20 | 70 | 20 |
| Silane coupling agent | 1.0 | 1.0 | 1.0 | 1.0 | 0.5 | 0.5 | 1.0 |
| Polysiloxane-1 | 1.0 | 1.0 | 1.0 | 1.0 | 1.5 | 1.5 | - |
| Polysiloxane-2 | - | - | - | - | - | - | 1.0 |
| Polysiloxane-3 | - | - | - | - | - | - | - |
| Silicone oil | - | - | - | - | - | - | - |
| Active agent | 1.3 | 1.3 | 1.3 | 1.3 | 1.3 | 4.7 | 1.3 |
| Aromatic oil | 38 | 31.25 | 24.5 | - | 12.5 | 12.5 | 12.5 |
| Zinc white | 3.0 | 3.0 | 3.0 | 3.0 | 3.0 | 3.0 | 3.0 |
| Stearic acid | 2.0 | 2.0 | 2.0 | 2.0 | 2.0 | 2.0 | 2.0 |
| Antioxidant | 2.0 | 2.0 | 2.0 | 2.0 | 2.0 | 2.0 | 2.0 |
| Wax | 0.5 | 0.5 | 0.5 | 0.5 | 0.5 | 0.5 | 0.5 |
| Sulfur | 1.8 | 1.8 | 1.8 | 1.8 | 1.8 | 1.8 | 1.8 |
| Vulcanization accelerator | 1.5 | 1.5 | 1.5 | 1.5 | 1.5 | 1.5 | 1.5 |
| Physical properties | | | | | | | |
| tanδ (-10°C) | 0.93 | 0.89 | 0.94 | 0.94 | 0.95 | 0.97 | 0.91 |
| tanδ (60°C) | 0.36 | 0.35 | 0.41 | 0.35 | 0.32 | 0.30 | 0.37 |
| Wet skid (index) | 112 | 109 | 111 | 111 | 113 | 115 | 110 |
| Lambourn abrasion (index) | 101 | 107 | 109 | 109 | 101 | 100 | 101 |
| Impact resilience (index) | 118 | 120 | 108 | 121 | 129 | 132 | 116 |
| Mixability | 5 | 5 | 5 | 5 | 5 | 5 | 5 |

Table III (Continued)

| | Ex. I-13 | Ex. I-14 | Comp. Ex. I-3 | Comp. Ex. I-4 | Comp. Ex. I-5 | Comp. Ex. I-6 | Comp. Ex. I-7 |
|---|---|---|---|---|---|---|---|
| Formulation | | | | | | | |
| SBR-1 | 44 | 44 | 44 | 44 | - | 22 | 44 |
| SBR-2 | 93.5 | 93.5 | 93.5 | 93.5 | 27.5 | - | 93.5 |
| SBR-3 | - | - | - | - | - | - | - |
| SBR-4 | - | - | - | - | - | - | - |
| SBR-5 | - | - | - | - | 80 | - | - |
| BR | - | - | - | - | - | 30 | - |
| NR | - | - | - | - | - | 54 | - |
| Carbon black-1 | 70 | 55 | 70 | 70 | 70 | 70 | - |
| Carbon black-2 | - | - | - | - | - | - | - |
| Carbon black-3 | - | - | - | - | - | - | 70 |
| Silica | 20 | 20 | 20 | 20 | 20 | 20 | 20 |
| Silane coupling agent | 1.0 | - | - | 1.0 | 1.0 | 1.0 | 1.0 |
| Polysiloxane-1 | - | 2.0 | - | - | 1.0 | 1.0 | 1.0 |
| Polysiloxane-2 | - | - | - | - | - | - | - |
| Polysiloxane-3 | 1.0 | - | - | - | - | - | - |
| Silicone oil | - | - | - | 1.0 | - | - | - |
| Active agent | 1.3 | 1.3 | 1.3 | 1.3 | 1.3 | 1.3 | 1.3 |
| Aromatic oil | 12.5 | - | 12.5 | 12.5 | 42.5 | 44 | - |
| Zinc white | 3.0 | 3.0 | 3.0 | 3.0 | 3.0 | 3.0 | 3.0 |
| Stearic acid | 2.0 | 2.0 | 2.0 | 2.0 | 2.0 | 2.0 | 2.0 |
| Antioxidant | 2.0 | 2.0 | 2.0 | 2.0 | 2.0 | 2.0 | 2.0 |
| Wax | 0.5 | 0.5 | 0.5 | 0.5 | 0.5 | 0.5 | 0.5 |
| Sulfur | 1.8 | 1.8 | 1.8 | 1.8 | 1.8 | 1.8 | 1.8 |
| Vulcanization accelerator | 1.5 | 1.5 | 1.5 | 1.5 | 1.5 | 1.5 | 1.5 |
| Physical properties | | | | | | | |
| tanδ (-10°C) | 0.93 | 0.92 | 0.90 | - | 0.73 | 0.53 | 0.79 |
| tanδ (60°C) | 0.35 | 0.34 | 0.39 | - | 0.29 | 0.30 | 0.27 |
| Wet skid (index) | 112 | 109 | 109 | - | 99 | 91 | 90 |
| Lambourn abrasion (index) | 102 | 100 | 88 | - | 110 | 121 | 79 |
| Impact resilience (index) | 118 | 123 | 110 | - | 138 | 133 | 147 |
| Mixability | 5 | 5 | 3 | 2 | 5 | 5 | 5 |

Comparative Example I-1 of Table III shows the case of a conventional cap compound. Comparative Example I-2 shows that when silica and a silane coupling agent are compounded into a base of the composition of Comparative Example I-1, the wear and processability become poor. Compared with this, with the rubber compositions of Examples I-1 to I-14 where the specific polysiloxane and silane coupling agents of the present invention and the specific polysiloxane alone are compounded, the wear remains the same or better, the wet skid resistance is excellent, and there are no problems at all in the low rolling resistance and the processability. Further, in Example I-14, where polysiloxane alone (no silane coupling agent) was compounded as compared with Example I-9, while the abrasion resistance was somewhat decreased, the impact resilience was somewhat increased and there were no problems in the processability.

As opposed to this, in a system such as Comparative Example I-3 where no polysiloxane or silane coupling agent are compounded, the abrasion resistance and processability are poor. Further, in a system such as Comparative Example I-4 where silicone oil is compounded instead of the polysiloxane of Example I-1, the rubber sheet became foamed and could not be used in practice. In Comparative Examples I-5 and I-6 which are systems with polysiloxane and a silane coupling agent compounded, but the polymer system is outside the boundary of the invention as compared to Example I-1, the wet skid resistance was inferior. Further, in the system of Comparative Example I-7 where carbon black outside of the invention is compounded as compared with Example I-1, the wet skid resistance and the abrasion resistance are inferior.

As explained above, according to the first aspect of the present invention, by compounding a specific polysiloxane into the system of a polymer containing a specific SBR, carbon black, and silica, more preferably, by compounding further a silane coupling agent, the processability of the unvulcanized rubber composition - a defect of the conventional systems containing silica - can be improved. Further, the physical properties of the vulcanized rubber composition remain the same or become better and the dispersion of the silica is good, and therefore the tanδ temperature dependency becomes large, the wet skid resistance and rolling resistance are improved, and the abrasion resistance is improved. Accordingly, the rubber composition of the present invention is extremely useful as a rubber composition for tires for passenger cars, trucks, and buses, particularly tread rubber where wet skid resistance and abrasion resistance are required (for example, tread rubber for high performance tires).

Examples II-1 to II-12 and Comparative Examples II-1 to II-9

For the other ingredients used for the formulations of the following Examples and Comparative Examples, the following commercially available products were used.

SBR-1: "NS114" made by Nippon Zeon (Tg: -47°C)
SBR-2: "NS112" made by Nippon Zeon (Tg: -58°C)
SBR-3: "NS116" made by Nippon Zeon (Tg: -30°C)
SBR-4: "Nipol 1502" made by Nippon Zeon (Tg: -52°C)
SBR-5: Solution polymerized SBR (Tg: -21°C)
NR: SIR-20 (Tg: -71°C)
BR: "Nipol 1220" made by Nippon Zeon (Tg: -106°C)
Carbon black-1: "SEAST KH" made by Tokai Carbon ($N_2SA$ = 93 $m^2/g$, 24M4DBP = 101 ml/100 mg)
Carbon black-2: HAF grade carbon black ($N_2SA$ = 84 $m^2/g$, 24M4DBP = 107 ml/100 mg)
Carbon black-3: "DIA BLACK E" made by Mitsubishi Kasei ($N_2SA$ = 41 $m^2/g$, 24M4DBP = 78 ml/100 mg)
(Note) The $N_2SA$ and 24M4DBP oil absorptions of the above carbon blacks were measured by ASTM-D3037-93 and ASTM-D-3493, respectively.
Silica: "Nipsil AQ" made by Nippon Silica Kogyo
Silane coupling agent: "Si69" made by Degussa
Silicone oil: "KF99" made by Shin-Etsu Chemical
Active agent: Diethylene glycol
Aromatic oil: "Process Oil X-140" made by Kyodo Sekiyu
Zinc White: "Zinc White No. 3" made by Seido Kagaku
Stearic acid: "Lunac YA" made by Kao Soap Co.
Antioxidant: N-phenyl-N'-(1,3-dimethyl)-p-phenylene diamine ("Antigene 6C" made by Sumitomo Chemical)
Wax: "Sunnoc" made by Ouchi Shinko Chemical Industrial
Sulfur: Oil treated sulfur
Vulcanization accelerator: N-t-butyl-2-benzothiazolyl sulfenamide ("Nocceler NS-F" made by Ouchi Shinko Chemical Industrial)

Preparation of Samples

The ingredients except for the vulcanization accelerator and sulfur of the formulation (parts by weight) shown in Table IV were mixed in a 1.8 liter closed mixer for 3 to 5 minutes. The mixture was discharged when reaching 165±5°C. The vulcanization accelerator and the sulfur were mixed with this master batch by an 8-inch open roll to obtain the rubber composition. The "mixability" in the unvulcanized physical properties of the rubber composition thus obtained was evaluated.

Next, the composition was pressed and vulcanized in a 15 x 15 x 0.2 cm mold at 160°C for 20 minutes to prepare the desired test piece (rubber sheet). This was measured and evaluated for the "tanδ (-20°C, 60°C)", "wet skid resistance", "Lambourn abrasion", and "impact resilience" of the vulcanized physical properties.

The test methods for the unvulcanized physical properties and the vulcanized physical properties of the compositions obtained in the Examples were as follows:

Vulcanized Physical Properties

1) tanδ (-20°C, 60°C)

A viscoelasticity spectrometer (made by Toyo Seiki) was used to measure the value under conditions of temperatures of -20°C and 60°C, an initial strain of 10%, a dynamic stress of ±2%, and a frequency of 20 Hz.

2) Wet Skid Resistance

A British Portable Skid Tester was used to measure the value under conditions of a wet road (temperature 20°C). The values were indexed to Comparative Example II-1 as 100. The larger the value, the better the skid resistance shown.

3) Lambourn Abrasion

A Lambourn abrasion tester (made by Iwamoto Seisakusho) was used to measure the wear loss under conditions of a temperature of 20°C and a slip rate of 50%. The values were indexed to Comparative Example II-1 as 100. The larger the value, the better the abrasion resistance shown.

4) Impact Resilience

The impact resilience at a temperature of 60°C was measured according to JIS K 6301.

Unvulcanized Physical Properties

1) Mixability

The mixing performance of the mixed rubber, the sheeting, the state of dispersion of the carbon black and silica, etc. were evaluated by a 5 point system.

These Examples show the results of evaluation of mixing of polysiloxane, the silane coupling agent, and all ingredients in rubber compositions of mixtures of SBR systems and SBR and NR or BR systems. These formulations and the results thereof are shown in Table IV.

Table IV

| | Comp. Ex. II-1 | Comp. Ex. II-2 | Ex. II-1 | Ex. II-2 | Ex. II-3 | Ex. II-4 | Ex. II-5 |
|---|---|---|---|---|---|---|---|
| Formulation | | | | | | | |
| SBR-1 | 50 | 50 | 50 | 50 | 50 | 50 | 25 |
| SBR-2 | - | - | - | - | - | - | - |
| SBR-3 | - | - | - | - | - | - | 25 |
| SBR-4 | - | - | - | - | - | - | - |
| SBR-5 | - | - | - | - | - | - | - |
| NR | 50 | 50 | 50 | 50 | 50 | 50 | 50 |
| BR | - | - | - | - | - | - | - |
| Carbon black-1 | 50 | 30 | 30 | 30 | 30 | 30 | 30 |
| Carbon black-2 | - | - | - | - | - | - | - |
| Carbon black-3 | - | - | - | - | - | - | - |
| Silica | - | 20 | 20 | 20 | 20 | 20 | 20 |
| Silane coupling agent | - | 2.0 | 1.0 | 0.5 | 1.5 | 1.0 | 1.0 |
| Polysiloxane-1 | - | - | 1.0 | 1.5 | 0.5 | 3.0 | 1.0 |
| Polysiloxane-2 | - | - | - | - | - | - | - |
| Polysiloxane-3 | - | - | - | - | - | - | - |
| Silicone oil | - | - | - | - | - | - | - |
| Active agent | - | 1.3 | 1.3 | 1.3 | 1.3 | 1.3 | 1.3 |
| Aromatic oil | 5 | 5 | 5 | 5 | 5 | 5 | 5 |
| Zinc white | 3.0 | 3.0 | 3.0 | 3.0 | 3.0 | 3.0 | 3.0 |
| Stearic acid | 2.0 | 2.0 | 2.0 | 2.0 | 2.0 | 2.0 | 2.0 |
| Antioxidant | 2.0 | 2.0 | 2.0 | 2.0 | 2.0 | 2.0 | 2.0 |
| Wax | 0.5 | 0.5 | 0.5 | 0.5 | 0.5 | 0.5 | 0.5 |
| Sulfur | 1.7 | 1.7 | 1.7 | 1.7 | 1.7 | 1.7 | 1.7 |
| Vulcanization accelerator | 0.8 | 0.8 | 0.8 | 0.8 | 0.8 | 0.8 | 0.8 |
| Physical properties | | | | | | | |
| tanδ (-20°C) | 0.72 | 0.74 | 0.75 | 0.75 | 0.75 | 0.75 | 0.84 |
| tanδ (60°C) | 0.18 | 0.17 | 0.16 | 0.16 | 0.16 | 0.15 | 0.17 |
| Wet skid (index) | 100 | 107 | 109 | 110 | 109 | 111 | 112 |
| Lambourn abrasion (index) | 100 | 91 | 105 | 109 | 102 | 112 | 101 |
| Impact resilience (index) | 100 | 109 | 116 | 117 | 115 | 117 | 110 |
| Mixability | 5 | 3 | 5 | 5 | 5 | 5 | 5 |

Table IV (Continued)

| | Ex. II-6 | Ex. II-7 | Ex. II-8 | Ex. II-9 | Ex. II-10 | Ex. II-11 | Comp. Ex. II-3 |
|---|---|---|---|---|---|---|---|
| Formulation | | | | | | | |
| SBR-1 | - | - | 50 | 50 | 50 | 50 | 50 |
| SBR-2 | - | 75 | - | - | - | - | - |
| SBR-3 | - | - | - | - | - | - | - |
| SBR-4 | 50 | - | - | - | - | - | - |
| SBR-5 | - | - | - | - | - | - | - |
| NR | 50 | - | 50 | 50 | 50 | 50 | 50 |
| BR | - | 25 | - | - | - | - | - |
| Carbon black-1 | 30 | 30 | - | 15 | 30 | 30 | 30 |
| Carbon black-2 | - | - | 30 | - | - | - | - |
| Carbon black-3 | - | - | - | - | - | - | - |
| Silica | 20 | 20 | 20 | 35 | 20 | 20 | 20 |
| Silane coupling agent | 1.0 | 1.0 | 1.0 | 1.7 | 1.0 | - | - |
| Polysiloxane-1 | 1.0 | 1.0 | 1.0 | 1.8 | - | 2.0 | - |
| Polysiloxane-2 | - | - | - | - | 1.0 | - | - |
| Polysiloxane-3 | - | - | - | - | - | - | - |
| Silicone oil | - | - | - | - | - | - | - |
| Active agent | 1.3 | 1.3 | 1.3 | 2.3 | 1.3 | 1.3 | 1.3 |
| Aromatic oil | 5 | 5 | 5 | 5 | 5 | 5 | 5 |
| Zinc white | 3.0 | 3.0 | 3.0 | 3.0 | 3.0 | 3.0 | 3.0 |
| Stearic acid | 2.0 | 2.0 | 2.0 | 2.0 | 2.0 | 2.0 | 2.0 |
| Antioxidant | 2.0 | 2.0 | 2.0 | 2.0 | 2.0 | 2.0 | 2.0 |
| Wax | 0.5 | 0.5 | 0.5 | 0.5 | 0.5 | 0.5 | 0.5 |
| Sulfur | 1.7 | 1.7 | 1.7 | 1.7 | 1.7 | 1.7 | 1.7 |
| Vulcanization accelerator | 0.8 | 0.8 | 0.8 | 0.8 | 0.8 | 0.8 | 0.8 |
| Physical properties | | | | | | | |
| tanδ (-20°C) | 0.74 | 0.66 | 0.77 | 0.77 | 0.74 | 0.75 | 0.74 |
| tanδ (60°C) | 0.17 | 0.15 | 0.14 | 0.14 | 0.16 | 0.15 | 0.17 |
| Wet skid (index) | 108 | 108 | 110 | 111 | 108 | 108 | 106 |
| Lambourn abrasion (index) | 108 | 121 | 107 | 102 | 104 | 100 | 91 |
| Impact resilience (index) | 113 | 118 | 126 | 127 | 115 | 118 | 111 |
| Mixability | 5 | 5 | 5 | 5 | 5 | 5 | 3 |

Table IV (Continued)

| | Ex. II-12 | Comp. Ex. II-4 | Comp. Ex. II-5 | Comp. Ex. II-6 | Comp. Ex. II-7 | Comp. Ex. II-8 | Comp. Ex. II-9 |
|---|---|---|---|---|---|---|---|
| Formulation | | | | | | | |
| SBR-1 | 50 | 50 | 100 | 10 | - | 50 | 50 |
| SBR-2 | - | - | - | - | - | - | - |
| SBR-3 | - | - | - | - | - | - | - |
| SBR-4 | - | - | - | - | - | - | - |
| SBR-5 | - | - | - | - | 50 | - | - |
| NR | 50 | 50 | - | 90 | 50 | 50 | 50 |
| BR | - | - | - | - | - | - | - |
| Carbon black-1 | 30 | 30 | 30 | 30 | 30 | - | - |
| Carbon black-2 | - | - | - | - | - | - | - |
| Carbon black-3 | - | - | - | - | - | 30 | - |
| Silica | 20 | 20 | 20 | 20 | 20 | 20 | 50 |
| Silane coupling agent | 1.0 | 1.0 | 1.0 | 1.0 | 1.0 | 1.0 | 2.5 |
| Polysiloxane-1 | - | - | 1.0 | 1.0 | 1.0 | 1.0 | 2.5 |
| Polysiloxane-2 | - | - | - | - | - | - | - |
| Polysiloxane-3 | 1.0 | - | - | - | - | - | - |
| Silicone oil | - | 1.0 | - | - | - | - | - |
| Active agent | 1.3 | 1.3 | 1.3 | 1.3 | 1.3 | 1.3 | 3.3 |
| Aromatic oil | 5 | 5 | 5 | 5 | 5 | - | 5 |
| Zinc white | 3.0 | 3.0 | 3.0 | 3.0 | 3.0 | 3.0 | 3.0 |
| Stearic acid | 2.0 | 2.0 | 2.0 | 2.0 | 2.0 | 2.0 | 2.0 |
| Antioxidant | 2.0 | 2.0 | 2.0 | 2.0 | 2.0 | 2.0 | 2.0 |
| Wax | 0.5 | 0.5 | 0.5 | 0.5 | 0.5 | 0.5 | 0.5 |
| Sulfur | 1.7 | 1.7 | 1.7 | 1.7 | 1.7 | 1.7 | 1.7 |
| Vulcanization accelerator | 0.8 | 0.8 | 0.8 | 0.8 | 0.8 | 0.8 | 0.8 |
| Physical properties | | | | | | | |
| tanδ (-20°C) | 0.74 | - | 0.81 | 0.69 | 0.93 | 0.73 | 0.79 |
| tanδ (60°C) | 0.16 | - | 0.18 | 0.16 | 0.22 | 0.13 | 0.13 |
| Wet skid (index) | 107 | - | 112 | 99 | 116 | 101 | 115 |
| Lambourn abrasion (index) | 102 | - | 93 | 110 | 82 | 79 | 95 |
| Impact resilience (index) | 116 | - | 106 | 118 | 81 | 131 | 132 |
| Mixability | 5 | 2 | 5 | 5 | 5 | 5 | 5 |

Comparative Example II-1 of Table IV shows the case of a conventional cap compound. Comparative Example II-2 shows that when silica and a silane coupling agent are compounded into a base of the composition of Comparative Example II-1, the abrasion resistance and processability become poorer. Compared with this, with the rubber compositions of Examples II-1 to II-12 where the specific polysiloxane and silane coupling agents according to the present invention and the specific polysiloxane alone are compounded, the abrasion resistance remains the sane or better, the rolling resistance and the wet skid resistance are improved, and there are no problems at all in the processability. Further, in Example II-11, where polysiloxane alone (no silane coupling agent) was compounded as compared with Example II-1, while the abrasion resistance was somewhat decreased, there were no problems in the processability. As opposed to this, in a system such as Comparative Example II-3 where neither polysiloxane nor silane coupling agent is

compounded, the abrasion resistance and processability are poor. Further, in a system such as Comparative Example II-4 where silicone oil is compounded instead of the polysiloxane of Example II-1, the rubber sheet became foamed and could not be used in practice. In Comparative Examples II-5 to II-7 which are systems with polysiloxane and a silane coupling agent, but the polymer system is outside the boundary of the present invention as compared to Example II-1, the abrasion resistance or the wet skid resistance were inferior. Further, in the system of Comparative Example II-8 where carbon black outside of the invention is compounded, the abrasion resistance was inferior. Further, in Comparative Example II-9 where no carbon black at all is compounded as compared with Example II-1, the abrasion resistance was poor.

As explained above, according to the second aspect of the present invention, by compounding a specific polysiloxane into the system of a polymer containing a specific SBR, carbon black, and silica, more preferably, by further compounding a silane coupling agent, the processability of the unvulcanized rubber composition - a defect of the conventional systems containing silica - can be improved. Further, the physical properties of the vulcanized rubber composition remain the same or become better and the dispersion of the silica is good, and therefore, the tan$\delta$ temperature dependency becomes large, the rolling resistance and wet skid resistance are improved, and the abrasion resistance is improved. Accordingly, the rubber composition of the present invention is extremely useful as a rubber composition for tires for passenger cars, trucks, and buses, particularly tread rubber where a low rolling resistance and wet skid resistance are sought (for example, tread rubber for low fuel consumption tires).

Examples III-1 to III-14 and Comparative Examples III-1 to III-6

For the other ingredients used for the formulations of the following Examples and Comparative Examples, the following commercially available products were used.

NR: SIR-20 (Tg: -71°C)
BR: "Nipol 1220" made by Nippon Zeon (Tg: -106°C)
SBR-1: "Nipol 1712" made by Nippon Zeon (Tg: -51°C, 37.5 phr, oil extended)
SBR-2: "Nipol 9520" made by Nippon Zeon (Tg: -32°C, 37.5 phr, oil extended)
Carbon black-1: "DIA BLACK A" made by Mitsubishi Kasei ($N_2SA$ = 142 $m^2/g$, 24M4DBP = 98 ml/100 mg)
Carbon black-2: "SEAST KH" made by Tokai Carbon ($N_2SA$ = 93 $m^2/g$, 24M4DBP = 101 ml/100 mg)
Carbon black-3: "DIA BLACK E' made by Mitsubishi Kasei ($N_2SA$ = 41 $m^2/g$, 24M4DBP = 78 ml/100 mg)
(Note) The $N_2SA$ and 24M4DBP oil absorptions of the above carbon blacks were measured according to ASTM-D3037-93 and ASTM-D-3493, respectively.
Silica: "Nipsil AQ" made by Nippon Silica Kogyo
Silane coupling agent: "Si69" made by Degussa
Silicone oil: "KF99" made by Shin-Etsu Chemical
Active agent: Diethylene glycol
Liquid polymer: Liquid BR, molecular weight 15000, 1,4 cis 80%
Aromatic oil: "Process Oil X-140" made by Kyodo Sekiyu
Zinc White: "Zinc White No. 3" made by Seido Kagaku
Stearic acid: "Lunac YA" made by Kao
Antioxidant: N-phenyl-N'-(1,3-dimethyl)-p-phenylene diaimine ("Antigene 6C" made by Sumitomo Chemical)
Wax: "Sunnoc" made by Ouchi Shinko Chemical Industrial
Sulfur: Oil treated sulfur
Vulcanization accelerator: N-t-butyl-2-benzothiazolyl sulfenamide ("Nocceler NS-F" made by Ouchi Shinko Chemical Industrial)

Preparation of Samples

The ingredients except for the vulcanization accelerator and sulfur of the formulation (parts by weight) shown in Table V were mixed in a 1.8 liter closed mixer for 3 to 5 minutes. The mixture was discharged when reaching 165±5°C. The vulcanization accelerator and the sulfur were mixed with this master batch by an 8-inch open roll to obtain the rubber composition. The "mixability" in the unvulcanized physical properties of the rubber composition thus obtained was evaluated.

Next, the composition was pressed and vulcanized in a 15 x 15 x 0.2 cm mold at 160°C for 20 minutes to prepare the desired test piece (rubber sheet). This was measured and evaluated for the "E1 (0°C)" and "Lambourn abrasion" of the vulcanized physical properties.

Further, 185/70R14 tires were mounted on a 2000 cc front engine, front wheel drive passenger car, held at an air pressure of the internal pressure prescribed by the JATMA, and evaluated as to the "groove area (%)", "braking on

ice", and "braking on snow".

The measurement and test methods for the examples were as follows:

(1) E' (0°C)

A viscoelasticity spectrometer (made by Toyo Seiki) was used to measure the value under conditions of a temperature of 0°C, an initial strain of 10%, a dynamic stress of ±2%, and a frequency of 20 Hz.

(2) Lambourn Abrasion

A Lambourn abrasion tester (made by Iwamoto Seisakusho) was used to measure the wear loss under conditions of a temperature of 20°C and a slip rate of 50%. The values were indexed to Comparative Example III-1 as 100. The larger the value, the better the abrasion resistance shown.

(3) Mixability

The knitting performance of the mixed rubber, the sheeting, the state of dispersion of the carbon black and silica, etc. were evaluated by a 5 point system.

(4) Groove Area (%)

The ratio of the groove area to the total area of the tread surface contacting the ground (width contacting ground x circumference) was found.

(5) Braking on Ice

The braking distance when driving on an ice sheet at an initial speed of 40 km/h and then braking was measured. The values were indexed against Comparative Example III-1 as 100. The larger the value, the better the braking.

(6) Braking on Snow

The braking distance when driving on pressed snow at an initial speed of 40 km/h and then braking was measured. The values were indexed against Comparative Example III-1 as 100. The larger the value, the better the braking.

These Examples show the results of evaluation of mixing of polysiloxane and the silane coupling agent in systems of rubber compositions of NR and BR and systems of rubber compositions of NR and SBR. These formulations and the results thereof are shown in Table V.

Table V

| | Comp. Ex. III-1 | Comp. Ex. III-2 | Ex. III-1 | Ex. III-2 | Ex. III-3 | Ex. III-4 | Ex. III-5 |
|---|---|---|---|---|---|---|---|
| Formulation | | | | | | | |
| NR | 60 | 60 | 60 | 60 | 60 | 60 | 100 |
| BR | 40 | 40 | 40 | 40 | 40 | 40 | - |
| SBR-1 | - | - | - | - | - | - | - |
| SBR-2 | - | - | - | - | - | - | - |
| Carbon black-1 | - | - | - | 40 | 40 | 40 | 40 |
| Carbon black-2 | 60 | 40 | 40 | - | - | - | - |
| Carbon black-3 | - | - | - | - | - | - | - |
| Silica | - | 20 | 20 | 20 | 20 | 20 | 20 |
| Silane coupling agent | - | 2.0 | 1.0 | 1.0 | 0.5 | 1.0 | 1.0 |
| Polysiloxane-1 | - | - | 1.0 | 1.0 | 1.5 | 3.0 | 1.0 |
| Polysiloxane-2 | - | - | - | - | - | - | - |
| Polysiloxane-3 | - | - | - | - | - | - | - |
| Silicone oil | - | - | - | - | - | - | - |
| Active agent | - | 1.3 | 1.3 | 1.3 | 1.3 | 1.3 | 1.3 |
| Liquid polymer | 15 | 15 | 15 | 15 | 15 | 15 | 15 |
| Aromatic oil | 15 | 15 | 15 | 15 | 15 | 15 | 15 |
| Zinc white | 3.0 | 3.0 | 3.0 | 3.0 | 3.0 | 3.0 | 3.0 |
| Stearic acid | 3.0 | 3.0 | 3.0 | 3.0 | 3.0 | 3.0 | 3.0 |
| Antioxidant | 2.0 | 2.0 | 2.0 | 2.0 | 2.0 | 2.0 | 2.0 |
| Wax | 1.0 | 1.0 | 1.0 | 1.0 | 1.0 | 1.0 | 1.0 |
| Sulfur | 1.5 | 1.5 | 1.5 | 1.5 | 1.5 | 1.5 | 1.5 |
| Vulcanization accelerator | 1.2 | 1.2 | 1.2 | 1.2 | 1.2 | 1.2 | 1.2 |
| Physical properties | | | | | | | |
| E' (0°C) | 5.9 | 5.7 | 5.5 | 5.6 | 5.4 | 5.3 | 5.8 |
| Lambourn abrasion (index) | 100 | 96 | 101 | 121 | 123 | 126 | 114 |
| Mixability | 5 | 3 | 5 | 5 | 5 | 5 | 5 |
| Groove area (%) | 40 | 40 | 40 | 40 | 40 | 40 | 40 |
| Braking on ice (index) | 100 | 108 | 111 | 110 | 112 | 113 | 109 |
| Braking on snow (index) | 100 | 103 | 104 | 104 | 105 | 105 | 104 |

Table V (Continued)

| | Ex. III-6 | Ex. III-7 | Ex. III-8 | Ex. III-9 | Ex. III-10 | Ex. III-11 | Ex. III-12 |
|---|---|---|---|---|---|---|---|
| Formulation | | | | | | | |
| NR | 80 | 60 | 60 | 60 | 60 | 60 | 60 |
| BR | - | 40 | 40 | 40 | 40 | 40 | 40 |
| SBR-1 | 27.5 | - | - | - | - | - | - |
| SBR-2 | - | - | - | - | - | - | - |
| Carbon black-1 | 40 | 20 | 30 | 40 | 40 | 40 | 40 |
| Carbon black-2 | - | - | - | - | - | - | - |
| Carbon black-3 | - | - | - | - | - | - | - |
| Silica | 20 | 40 | 20 | 20 | 20 | 20 | 20 |
| Silane coupling agent | 1.0 | 2.0 | 1.0 | 1.0 | 1.0 | - | 1.0 |
| Polysiloxane-1 | 1.0 | 2.0 | 1.0 | 1.0 | - | 2.0 | 1.0 |
| Polysiloxane-2 | - | - | - | - | 1.0 | - | - |
| Polysiloxane-3 | - | - | - | - | - | - | - |
| Silicone oil | - | - | - | - | - | - | - |
| Active agent | 1.3 | 2.7 | 1.3 | 1.3 | 1.3 | 1.3 | 1.3 |
| Liquid polymer | 11.25 | 15 | 15 | - | 15 | 15 | 15 |
| Aromatic oil | 11.25 | 15 | 15 | 28 | 15 | 15 | 15 |
| Zinc white | 3.0 | 3.0 | 3.0 | 3.0 | 3.0 | 3.0 | 3.0 |
| Stearic acid | 3.0 | 3.0 | 3.0 | 3.0 | 3.0 | 3.0 | 3.0 |
| Antioxidant | 2.0 | 2.0 | 2.0 | 2.0 | 2.0 | 2.0 | 2.0 |
| Wax | 1.0 | 1.0 | 1.0 | 1.0 | 1.0 | 1.0 | 1.0 |
| Sulfur | 1.5 | 1.5 | 1.5 | 1.5 | 1.5 | 1.5 | 1.5 |
| Vulcanization accelerator | 1.2 | 1.2 | 1.2 | 1.2 | 1.2 | 1.2 | 1.2 |
| Physical properties | | | | | | | |
| E' (0°C) | 6.4 | 5.6 | 3.5 | 5.6 | 5.6 | 5.4 | 5.6 |
| Lambourn abrasion (index) | 109 | 118 | 110 | 115 | 120 | 114 | 121 |
| Mixability | 5 | 5 | 5 | 5 | 5 | 5 | 5 |
| Groove area (%) | 40 | 40 | 40 | 40 | 40 | 40 | 32 |
| Braking on ice (index) | 108 | 115 | 115 | 110 | 110 | 111 | 115 |
| Braking on snow (index) | 103 | 104 | 103 | 104 | 103 | 104 | 102 |

Table V (Continued)

| | Comp. Ex. III-3 | Comp. Ex. III-4 | Comp. Ex. III-5 | Comp. Ex. III-6 | Ex. III-13 | Ex. III-14 |
|---|---|---|---|---|---|---|
| Formulation | | | | | | |
| NR | 60 | 60 | 60 | 60 | 60 | 60 |
| BR | 40 | 40 | 20 | 40 | 40 | 40 |
| SBR-1 | - | - | - | - | - | - |
| SBR-2 | - | - | 27.5 | - | - | - |
| Carbon black-1 | 40 | 40 | 40 | - | 40 | 40 |
| Carbon black-2 | - | - | - | - | - | - |
| Carbon black-3 | - | - | - | 40 | - | - |
| Silica | 20 | 20 | 20 | 20 | 20 | 20 |
| Silane coupling agent | - | 1.0 | 1.0 | 1.0 | 1.0 | 1.0 |
| Polysiloxane-1 | - | - | 1.0 | 1.0 | 1.0 | - |
| Polysiloxane-2 | - | - | - | - | - | - |
| Polysiloxane-3 | - | - | - | - | - | 1.0 |
| Silicone oil | - | 1.0 | - | - | - | - |
| Active agent | 1.3 | 1.3 | 1.3 | 1.3 | 1.3 | 1.3 |
| Liquid polymer | 15 | 15 | 11.25 | 10 | 15 | 15 |
| Aromatic oil | 15 | 15 | 11.25 | 10 | 15 | 15 |
| Zinc white | 3.0 | 3.0 | 3.0 | 3.0 | 3.0 | 3.0 |
| Stearic acid | 3.0 | 3.0 | 3.0 | 3.0 | 3.0 | 3.0 |
| Antioxidant | 2.0 | 2.0 | 2.0 | 2.0 | 2.0 | 2.0 |
| Wax | 1.0 | 1.0 | 1.0 | 1.0 | 1.0 | 1.0 |
| Sulfur | 1.5 | 1.5 | 1.5 | 1.5 | 1.5 | 1.5 |
| Vulcanization accelerator | 1.2 | 1.2 | 1.2 | 1.2 | 1.2 | 1.2 |
| Physical properties | | | | | | |
| E' (0°C) | 5.5 | - | 9.6 | 5.1 | 5.6 | 5.5 |
| Lambourn abrasion (index) | 98 | - | 104 | 88 | 121 | 101 |
| Mixability | 3 | 2 | 5 | 5 | 5 | 5 |
| Groove area (%) | 40 | - | 40 | 40 | 55 | 40 |
| Braking on ice (index) | 107 | - | 94 | 110 | 102 | 112 |
| Braking on snow (index) | 101 | - | 95 | 103 | 109 | 105 |

Comparative Example III-1 of Table V shows the case of a conventional cap compound. Comparative Example III-2 shows that when silica and a silane coupling agent are compounded into a base of the composition of Comparative Example III-1, the abrasion resistance and processability become poorer. Compared with this, with the rubber compositions of Examples III-1 to III-14 where the specific polysiloxane and silane coupling agents according to the present invention and the specific polysiloxane alone are compounded, the low temperature hardness is decreased, the braking on ice is excellent, and the abrasion resistance and mixability are both good. Note that in Example III-12, a test was performed on a tire different from Example III-2 only in the groove area, but similar good properties were obtained. Further, in Example III-11, where polysiloxane alone (no silane coupling agent) was compounded as compared with Example III-2, while the abrasion resistance was somewhat decreased, there were no problems in the processability. As opposed to this, in a system such as shown in Comparative Example III-3 where neither polysiloxane nor silane coupling agent is compounded as compared with Example III-2, the abrasion resistance and processability are poor. Further, in a system such as Comparative Example III-4 where silicone oil is blended instead of the polysiloxane as compared with Example III-2, the rubber sheet became foamed and could not be used in practice. In a system such as Comparative Example III-5 where the polymer system is out of the invention as compared with Example III-2, the braking on ice is poor, while in a system such as Comparative Example III-6 where carbon black outside of the invention is blended, the abrasion resistance was inferior.

As explained above, according to the third aspect of the present invention, by compounding a specific polysiloxane into the system of a polymer containing a specific polymer, carbon black, and silica, more preferably, by further compounding a silane coupling agent, the processability of the unvulcanized rubber composition - a detect of the conventional systems containing silica - can be improved. Further, the physical properties of the vulcanized rubber composition remain the same or become better and the dispersion of the silica is good, and therefore, the low temperature hardness is reduced, the braking on ice becomes good, and the abrasion resistance is improved as well. Accordingly, the rubber composition of the present invention is extremely useful as a rubber composition for tires for passenger cars, trucks, and buses, particularly tread rubber where ice and snow performance and abrasion resistance are sought (for example, tread rubber for studless tires).

## Claims

1. A tire having a tread comprising a rubber composition comprising 100 parts by weight of a diene rubber, 5 to 100 parts by weight of silica, 10 to 150 parts by weight of carbon black, and 1 to 40% by weight, based upon the weight of the silica, of a polysiloxane having an average degree of polymerization of 3 to 10,000 containing the following alkoxysilyl group (I) or acyloxysilyl group (II):

$$\equiv Si\text{-}OR^1 \qquad (I)$$

$$\equiv Si\text{-}OCOR^2 \qquad (II)$$

wherein $R^1$ is a substituted or unsubstituted monovalent hydrocarbon group having 1 to 18 carbon atoms or an ether bond-containing organic group having 1 to 18 carbon atoms and $R^2$ is hydrogen or a hydrocarbon group having 1 to 21 carbon atoms, provided that at least six alkoxy groups or at least two acyloxy groups directly bonded to the Si atoms are present in each molecule.

2. A tire as claimed in claim 1, further comprising 1 to 40% by weight, based upon the weight of the silica content, of a silane coupling agent therein.

3. A tire as claimed in claim 1 or 2, wherein the diene rubber contains at least 30 parts by weight of styrenebutadiene copolymer rubber (SBR) having a 20 to 60% styrene content, the amount of silica compounded is 5 to 70 parts by weight, the carbon black has a nitrogen specific surface area ($N_2SA$) of at least 70 $m^2/g$ and a 24M4DBP oil absorption of at least 70 ml/100g, and the amount of the carbon black compounded is 10 to 100 parts by weight, and a total weight of the silica and the carbon black is at least 50 parts by weight.